# FASCICULE DE BREVET EUROPEEN

(11) **EP 0 605 377 B1**
(45) Date de publication et mention de la délivrance du brevet: **29.04.1998**
(21) Numéro de dépôt: 93870212.3
(22) Date de dépôt: 10.11.1993
(51) Int. Cl.: C08L 95/00, E01C 7/26

(54) **Composition pour enrobés drainants**
Zusammensetzung für entwässerndes bituminöses Mischgut
Composition for bituminous draining mixes

(30) Priorité: 12.11.1992 BE 9200978
(43) Date de publication de la demande: 06.07.1994
(73) Titulaire: FINA RESEARCH S.A., B-7181 Seneffe (Feluy) (BE)
(72) Inventeur: Bredael, Pierre, B-1050 Bruxelles (BE)

(56) Documents cités:
- EP-A- 0 202 966
- EP-A- 0 329 836
- EP-A- 0 332 245
- DE-A- 2 248 603
- US-A- 3 338 849

## Description

La présente invention est relative à des compositions asphaltiques pour la préparation d'enrobés drainants. Elle concerne également l'utilisation de ces compositions pour la préparation d'enrobés drainants.

Sur la majorité des routes, les enrobés bitumineux conventionnels donnent généralement satisfaction. Cependant, les contraintes auxquelles ces routes sont soumises augmentent d'année en année. Les charges à l'essieu et les pressions de roulement des pneumatiques de plus en plus élevées et l'accroissement incessant du trafic ont inévitablement une influence sur la durée de vie de ces routes. On fait de plus en plus appel à des bitumes modifiés par des polymères et au développement de nouvelles structures d'enrobés afin de combattre les effets néfastes exercés par ces contraintes de circulation.

Les principaux objectifs techniques recherchés dans l'utilisation de bitumes modifiés sont:
- une plus grande résistance à la déformation permanente,
- une résistance améliorée à la fatigue à basse température,
- une augmentation des propriétés adhésives et cohésives.

Depuis de nombreuses années, la technique routière tente d'utiliser les sous-produits industriels et, parmi ceux-ci, les matières plastiques de récupération, provenant soit directement de l'industrie soit de déchets ménagers, présentent un intérêt particulier tant du point de vue du coût que d'un point de vue écologique; en effet, ce système permet l'élimination définitive des déchets et ne présente pas les risques liés à la présence possible d'agents de pollution dans les émissions de gaz lors de l'incinération.
Aux modifiants élastomères du type SBS (copolymères blocs styrène-butadiène- styrène) ou SBR (caoutchouc styrène-butadiène) et plastomères EVA (ethylène- vinyl acétate) sont venus s'ajouter des déchets de câbleries, composés essentiellement de LDPE (polyéthylène basse densité) en mélange avec du PVC (polychlorure de vinyle) et du polystyrène, ou des mélanges de polymères domestiques (EP-332245-A).

Les enrobés drainants ont fait l'objet de beaucoup d'intérêt. Ils sont actuellement le revêtement préférentiel des autoroutes et des voies à grande circulation. Leurs avantages sont bien connus:
- sécurité accrue pour les usagers: la suppression du film d'eau sur la chaussée conserve l'adhérence des pneus sur le sol ce qui assure une bonne trajectoire et un freinage efficace du véhicule. Le conducteur n'est plus ébloui par les réflexions multiples des nombreuses sources lumineuses. Les projections d'eau disparaissent.
- réduction du bruit: meilleure protection de l'environnement grâce à une augmentation des propriétés d'absorption du bruit, afin de diminuer le niveau des bruits perçus.
- réduction des coûts: durée de service accrue des couches de profilage et de fondation grâce à une évacuation d'eau optimale par la couche drainante de surface.

La fabrication des enrobés drainants demande beaucoup de soins; les composants entrant dans leur composition doivent avoir des qualités particulières. Les propriétés sont obtenues par la création de canaux au sein de l'épaisseur de l'asphalte, donc en augmentant le volume de vides. De par la structure ouverte des revêtements, le liant est soumis à des sollicitations différentes de celles rencontrées avec les revêtements bitumineux traditionnels.On ne peut donc pas utiliser les mêmes compositions. Afin de combattre efficacement ces effets et donc d'assurer la perennité des couches drainantes, il est nécessire d'avoir un film de liant suffisamment épais autour de chaque gravillon ainsi qu'une bonne adhésivité liant/granulat. La cohésion mécanique de l'enrobé est obtenue classiquement par l'addition d'élastomères neufs (SBS) ou recyclés (pneus broyés), le but étant d'obtenir un liant extrêmement visqueux et élastique aux températures de service. Les compositions bitumineuses dont la concentration en polyoléfine est supérieure à 5% en poids de bitume donnent des liants instables au stockage, fortement durcis et présentant des phénomènes de retrait au refroidissement.

Le brevet allemand DE-A-2248603 décrit une composition bitumineuse pour revêtement routier qui contient un mélange de squelette minéral combiné ave 5,7 à 6,6 % en poids d'un mélange plastique/bitume contenant de préférence 7,5 % en poids d'un copolymère d'éthylène.

Le brevet US-3,338,849 revendique un procédé de mélange d'une composition comprenant du caoutchouc recyclé, de la gilsonite et du polyéthylène, et de dispersion dudit mélange dans un asphalte.

La présente invention a pour but de fournir une composition à base d'asphalte présentant les caractéristiques ci-dessus mentionnées et permettant l'utilisation massive de HDPE (polyéthylène haute densité) recyclé.

Les compositions de l'invention sont caractérisées en ce qu'elles comprennent essentiellement :
- un squelette minéral comprenant (en poids) :
   de 79 à 88 parts de pierrailles de granulométrie 6/17 (entre 6 et 17mm)
   de 9 à 15 parts de sable de granulométrie 0,08/2
   de 3 à 8 parts de matériau de remplissage inerte de granulométrie inférieure à 0,08,
   calculées de façon à obtenir un total de 100 parts.
- du bitume ayant une pénétration comprise entre 65 et 150 dixièmes de mm à 25°C; en quantité correspondant à 3,5 à 7 % en poids;
- un premier modifiant choisi dans le groupe comprenant les copolymères styrene-butadiène ou styrène-isoprène ou un mélange de tels copolymères ou des pneus recyclés , en une quantité correspondant à 2 à 7 % en poids, calculés sur la masse du bitume,étendu eventuellement de 0 à 3 % en poids d'huile, calculés sur la masse du bitume.
- un second modifiant choisi dans le groupe comprenant les polyoléfines, le polyéthylène téréphtalate ou un mélange de tels polymères, en quantité correspondant à 0,5 à 5 % en poids, sans dépasser la quantité de bitume.

La présente invention a également pour objet l'utilisation de ces compositions pour la fabrication d'enrobés drainants.

Elle concerne en outre un procédé de préparation d'enrobés drainants, ce procédé étant caractérisé en ce qu'on introduit dans un malaxeur, à des températures comprises entre 130 et 185°C, de préférence environ 140°C en application industrielle et environ 180°C à l'échelle laboratoire:
a) un squelette minéral comprenant :
   de 79 à 88 parts de pierrailles de granulométrie 6/17
   de 9 à 15 parts de sable de granulométrie 0,08/2
   de 3 à 8 parts de matériau de remplissage inerte de granulométrie inférieure à 0,08.
b) soit
   (i)- du bitume ayant une pénétration comprise entre 65 et 150 dixièmes de mm à 25°C, en quantité correspondant à 3,5 à 7 % en poids;
   (ii)un premier modifiant choisi parmi les copolymères styrene-butadiène, les copolymères styrène-isoprène, les pneus recyclés et leurs mélanges, en une quantité correspondant à 2 à 7 % en poids, calculés sur la masse du bitume, étendu éventuellement de 0 à 3% en poids d'huile, calculés sur la masse du bitume,
      soit 3,57 à 7,7 % en poids, calculés sur la masse minérale, d'un liant modifié bitume-copolymère ( styrene-butadiène ou styrene-isoprène ou un mélange de tels copolymères) homogène, préparé en cuve à 150-180°C à partir des composants décrits sous (i) et (ii),
   c)un second modifiant choisi dans le groupe comprenant les polyoléfines, le polyethylène téréphtalate et les mélanges de tels polymères, en quantité correspondant à 0,5 à 5 % en poids, calculés sur la masse minérale.

L'invention concerne également la mise en oeuvre de surfaces de roulement ayant des propriétés drainantes, caractérisées par la composition décrite ci-dessus.
La granulométrie, telle qu'utilisée ici, doit être comprise comme signifiant que 80%, et de préférence 90%, de la matière doit avoir une granulométrie supérieure à la valeur inférieure et 80%, et de préférence 90%, une granulométrie inférieure à la valeur supérieure.

Dans une forme préférée de mise en oeuvre, l'invention est caractérisée en ce qu'elle est constituée d'un mélange d'environ:
- 100 parts de squelette minéral,
- 5,1 parts de bitume,
- 0,2 parts de SBS
- 2 parts de HDPE de préférence recyclé.

Dans une composition préférée, le squelette minéral comprend :
de 81 à 85 parts de pierrailles de granulométrie 7/14
de 11 à 13 parts de sable de granulométrie 0,08/2
de 4 à 6 parts de matériau de remplissage de granulométrie inférieure à 0,08.

Le squelette minéral est caractérisé par une granulométrie discontinue et doit avoir une composition et une granulométrie telles qu'elles assurent une teneur en vides en place comprise entre 15 et 30%, de préférence entre 15 et 25%.

Les pierrailles doivent avoir une dureté et une résistance au polissage élevées. Les pierrailles qui sont utilisées pour la réalisation de tels revêtements répondent de préférence aux conditions suivantes:
- coefficient de polissage accéléré sur la fraction 7/14 > 45% (norme NBN B11-204)
- coefficient micro Deval sur la catégorie 10/14 < 10 (norme AFNOR NF P18-572 octobre 1978)
- coefficient Los Angeles sur la catégorie 10/14 < 15 (norme AFNOR NF P18573 octobre 1978)
Les pierrailles peuvent être choisies parmi les matériaux usuels tels que silex, porphyre, quartzite, grès durs, par exemple.
Le matériau de remplissage peut être choisi parmi les fines de matières inertes de granulométrie inférieure à 0,08 , telles que par exemple le ciment, les fines de reconcassage, les cendres volantes, les poussières d'argile ou autres.

Les bitumes sont présents à raison de 3,5 à 7 % en poids. Les bitumes qui peuvent être utilisés pour la réalisation de tels revêtements sont les bitumes à usage routier , de préférence les bitumes de distillation ou les bitumes reconstitués ayant des valeurs de pénétration comprises entre 65 et 150 dmm (selon la norme ASTM D-5 ou IP 49 ) et des valeurs de Ring and Ball comprises entre 40 et 59°C ( ASTM D-36 ou IP 58 ). Ces bitumes peuvent éventuellement être acidifiés et/ou additionnés d'antioxydants. Les qualités préférées de bitume ont des pénétrations comprises entre 80 et 100 dmm .

La composition comprend en outre de 2 à 7 % en poids par rapport au bitume (de préférence 4 à 7 ) d'un élastomère butadiène-styrène. Comme copolymère particulièrement appropriés, on citera les copolymères de type SBR, SBS linéaire ou radial. Sont également utilisables les copolymères styrène isoprène, par exemple SIS (copolymères bloc styrène-isoprène-styrène). Ces élastomères sont utilisables sous forme neuve ou recyclée, seuls ou en mélange, étendus ou non avec 0 à 3 % d'huile (huile introduite lors de la préparation du SBS ou huile incorporée lors de l'utilisation du SBS recyclé sous forme de poudrette de caoutchouc).

La composition comprend enfin de 0,5 à 5 % en poids , de préférence 0,5 à 3, par rapport à la masse minérale d'une polyoléfine ou de polyéthylène téréphtalate, seuls ou en mélange, neufs ou recyclés. La polyoléfine sera choisie de préférence parmi les produits résultant de la polymérisation ou de la copolymérisation de l'éthylène ou du propylène, par exemple le polyéthylene (haute ou basse densité),le polypropylène ou les copolymères éthylène-propylène-diène monomères. Plus particulièrement, lors de l'utilisation de HDPE, les quantités seront de préférence limitées à 0,5 à 3 % en poids.
L'invention permet également de recycler les emballages secs après broyage. Les emballages souillés de solutions aqueuses ou huileuses (jusqu'à 30% en poids de l'emballage ) peuvent également être utilisés, sans lavage préalable. Le produit de recyclage préféré se présente sous forme de morceaux de HDPE déchiquetés.

En général, un enrobé drainant peut être préparé selon deux méthodes différentes:
a) malaxage des pierrailles avec des liants prémodifiés; ce type de préparation pose le problème de l'homogénéité du liant qui doit être préparé fraîchement et constamment agité pour éviter la décantation, et ne permet pas d'incorporer de grandes quantités de polyoléfines.
b) préparation extemporanée de la composition pour enrobés drainants; ce type de préparation, qui fait l'objet de l'invention, présente l'avantage d'éviter les problèmes de décantation au stockage et permet d'incorporer des quantités importantes de polyoléfines pour autant que l'on prédose le second modifiant. L'ordre d'addition des différents éléments de la composition est sans importance.

La composition suivant l'invention présente notamment les propriétés avantageuses suivantes:
stabilité Marshall accrue
impact écologique certain: recyclage de quantité importantes de polyoléfines.

L'addition directe de l'HDPE à l'asphalte permet le recyclage de maximum 3% par rapport à la masse de l'asphalte, ce qui représente 20 fois la quantité maximum utilisable via le bitume modifié.
Les exemples suivants sont donnés à titre d'illustration de la présente invention et ne comportent aucun caractère limitatif.L'essai Marshall caractérise les propriétés de résistance mécanique (stabilité) et plastique (fluage) mais ne permet pas de mesurer valablement toutes les propriétés mécaniques de l'asphalte drainant. Seules les mesures de stabilité sont significativement comparables.

### Exemples:

Toutes les expériences ont été menées dans les mêmes conditions opératoires. Les agrégats minéraux sont tamisés sur les tamis appropriés afin d'obtenir les calibres nécessaires et d'éliminer les particules fines adhérentes (tamisage humide). Les agrégats minéraux sont séchés à l'étuve à 105-110°C, par calibre, jusqu'à masse constante.
Individuellement, en commençant par le matériau de remplissage, on pèse cumulativement avec une précision de 0,5g les quantités de matériaux nécessaires ( par calibres nominaux croissants). L'agrégat est ensuite mélangé et porté en étuve à une température de 185°C.
La quantité de liant à utiliser (2kg) est portée à 180°C et introduite avec une précision de 0,1g dans le récipient de malaxage préchauffé à la température de malaxage (170°C). Ensuite, on ajoute le HDPE froid et l'agrégat chaud. Le matériau est parfaitement mélangé aussi rapidement que possible ( 135sec maximum) pour obtenir un mélange dans lequel le bitume est régulièrement réparti.

### Exemple 1:

L'enrobé testé répond à la composition suivante:
1)squelette minéral (répondant aux conditions décrites plus haut )
   reconcassés de Bande 7/14: 82 parts
   reconcassés de Bande 0/2 : 14 parts (comprenant 1 part de fines)
   fines Ankersmit type I : 4 parts
2) 5,1 parts en poids de bitume 80/100
3) 0,2 parts en poids de Finaprène (marque déposée de Pétrofina) 401 poudre (copolymère styrène-butadiène-styrène; 22% styrène)
4) second agent modifiant: 1 part en poids de HDPE sec.

### Exemple 2:

Composition identique à l'exemple 1 pour le squelette minéral, le bitume et le premier agent modifiant, mais ajout de 2 parts en poids de HDPE sec.

### Exemple 3:

Composition identique à l'exemple 1 pour le squelette minéral, le bitume et le premier agent modifiant, mais addition de 1 part en poids de HDPE huileux ( teneur en huile: 26,1% par rapport au HDPE).

### Exemple 4:

Composition identique à l'exemple 3 pour le squelette minéral, le bitume et le premier agent modifiant, mais addition de 2 parts de HDPE huileux.

### Exemple comparatif A:

L'enrobé testé répond à la composition suivante:
1) squelette minéral: identique à l'exemple 1.
2) 5,3 parts en poids de bitume 80/100.
Il n'y a pas d'agent modifiant.

### Exemple comparatif B:

Composition identique à l'exemple 1 pour le squelette minéral, le bitume et le premier agent modifiant, mais pas d'addition de second agent modifiant.

### Exemple comparatif C:

Composition identique à l'exemple 1 pour le squelette minéral, le bitume et le premier agent modifiant, mais addition de 0,3 parts en poids de cellulose comme second agent modifiant.

### Exemple comparatif D:

L'enrobé testé répond à la composition suivante:
1) squelette minéral: identique à l'exemple 1.
2) 5,3 parts en poids de bitume modifié composé de 91% de bitume 80/100, 6% de Finaprène (marque déposée de Pétrofina) 480 (copolymère styrène-butadiène-styrène; 30% styrène; contenu en huile: 50 parts pour 100 parts de caoutchouc) et 3% HDPE.

Les quantités et les résultats sont résumés au tableau ci-après dans lequel:
AD: addition directe du SBS et agent modifiant à l'enrobage
PM: liant préparé avant l'enrobage (pré-mélange)
(∗): teneur en huile : 26,1%
401P: Finaprène 401 poudre 480: Finaprène 480
A la lecture des résultats du tableau 1 , on constate que les enrobés obtenus selon l'invention présentent de meilleures propriétés d'utilisation.

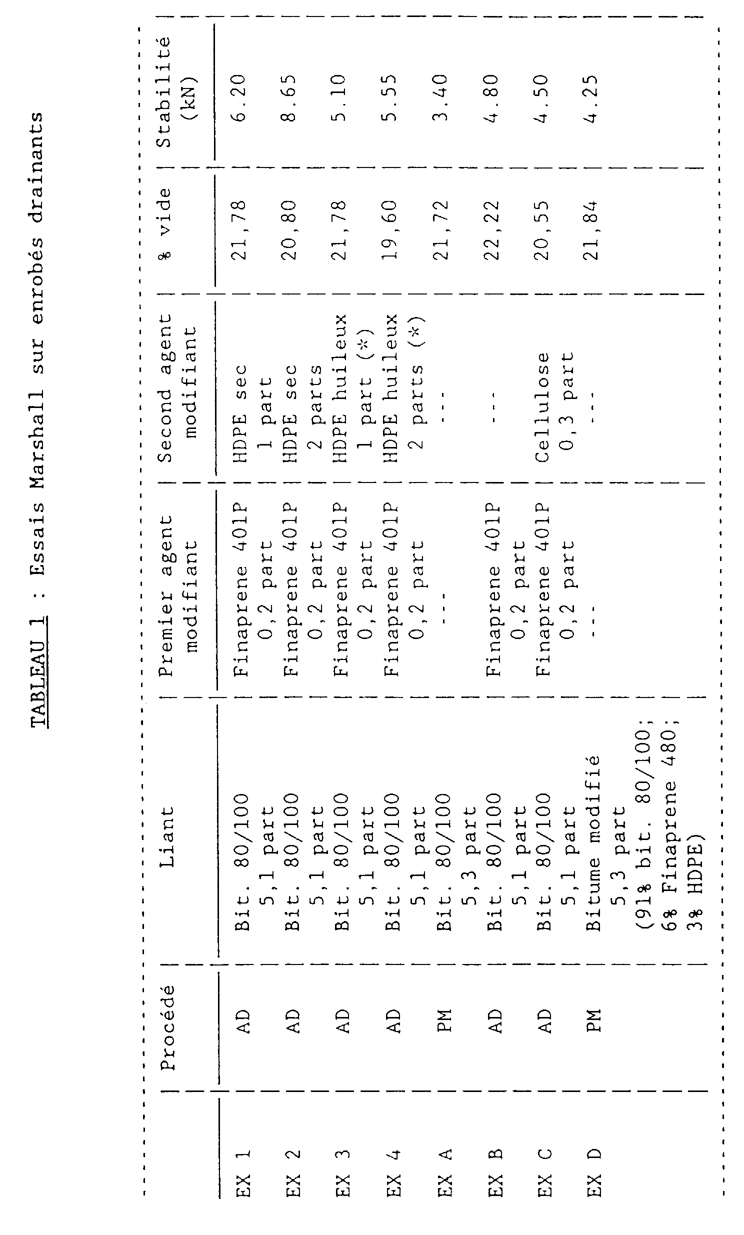

## Revendications

1. Compositions à base d'asphalte comprenant essentiellement
- un squelette minéral comprenant (en poids) :
de 79 à 88 parts de pierrailles de granulométrie 6/17
de 9 à 15 parts de sable de granulométrie 0,08/2
de 3 à 8 parts de matériau de remplissage inerte de granulométrie inférieurte à 0,08,
calculées pour obtenir un total de 100 parts.
- du bitume ayant une pénétration comprise entre 65 et 150 dixièmes de mm à 25°C; en quantité correspondant à 3.5 à 7 % en poids, calculés sur la masse minérale;
- un premier modifiant choisi dans le groupe comprenant les copolymères styrene-butadiène ou styrène-isoprène ou un mélange de tels copolymères ou des pneus recyclés , en une quantité correspondant à 2 à 7 % en poids calculés sur la masse du bitume, étendu éventuellement de 0 à 3 % en poids d'huile.
- un second modifiant choisi dans le groupe comprenant les polyoléfines, le polyéthylène téréphtalate ou un mélange de tels polymères, en quantité correspondant à 0.5 à 5 % en poids, calculés sur la masse minérale.

2. Compositions suivant la revendication 1 dans lesquelles le squelette minéral comprend :
de 81 à 85 parts de pierrailles de granulométrie 7/14
de 11 à 13 parts de sable de granulométrie 0,08/2
de 4 à 6 parts de matériau de remplissage de granulométrie inférieure à 0,08.

3. Compositions suivant les revendications 1 ou 2, caractérisées en ce que le bitume a une pénétration comprise entre 80 et 100 dixièmes de mm.

4. Compositions suivant les revendications 1 à 3 dans lesquelles le premier modifiant est introduit dans une quantité correspondant à 4 à 7 % en poids.

5. Compositions suivant les revendications 1 à 4 dans lesquelles le second modifiant est introduit en quantité correspondant a 0,5 à 3 % en poids.

6. Utilisation des compositions suivant les revendications 1 à 5 pour la fabrication d'enrobés drainants.

7. Procédé de préparation des compositions selon l'une quelconque des revendications 1 à 5, caractérisé en ce qu'on introduit dans un malaxeur, à des températures comprises entre 130 et 185°C,
a) le squelette minéral,
b) soit le bitume et le premier modifiant éventuellement étendu d'huile soit le liant modifié bitume-copolymère homogène préalablement mélangé en cuve à 150-180°C,
c) le second modifiant.

8. Procédé de préparation selon la revendication 7 dans lequel les composants sont introduits dans le malaxeur à une température d'environ 140°C.

9. Surfaces de roulement ayant des propriétés drainantes, caractérisées par les compositions suivant l'une quelconque des revendications 1 à 5 .

## Patentansprüche

1. Zusammensetzungen auf Asphaltbasis, die im wesentlichen umfassen:
- ein mineralisches Skelett, umfassend (nach Gewicht) : 79 bis 88 Teile Kies mit einer Granulometrie von 6/17, 9 bis 15 Teile Sand mit einer Granulometrie von 0,08/2, 3 bis 8 Teile inertes Füllmaterial mit einer Granulometrie von weniger als 0,08, die so berechnet sind, daß eine Gesamtmenge von 100 Teilen erhalten wird,
- Bitumen mit einer Eindringtiefe zwischen 65 und 150 Zehntel mm bei 25 °C; in einer nach der mineralischen Masse berechneten Menge, die 3,5 bis 7 Gew.-% entspricht;
- ein erstes gegebenenfalls mit 0 bis 3 Gew.-% Öl gestrecktes Modifikationsmittel, das aus der Gruppe ausgewählt wird, die Styrol-Butadien- oder Styrol-Isopren Copolymere oder ein Gemisch derartiger Copolymere oder recycelte Reifen umfaßt, in einer nach der Masse des Bitumens berechneten Menge, die 2 bis 7 Gew.-% entspricht;
- ein zweites Modifikationsmittel, das aus der Gruppe ausgewählt wird, die Polyolefine, Polyethylenterephthalat oder ein Gemisch derartiger Polymere umfaßt, in einer nach der mineralischen Masse berechneten Menge, die 0,5 bis 5 Gew.-% entspricht.

2. Zusammensetzungen nach Anspruch 1, in denen das mineralische Skelett umfaßt:
81 bis 85 Teile Kies mit einer Granulometrie von 7/14,
11 bis 13 Teile Sand mit einer Granulometrie von 0,08/2,
4 bis 6 Teile eines Füllmaterials mit einer Granulometrie von weniger als 0,08.

3. Zusammensetzungen nach den Ansprüchen 1 oder 2, ***dadurch gekennzeichnet,*** daß der Bitumen eine Eindringtiefe zwischen 80 und 100 Zehntel mm aufweist.

4. Zusammensetzungen nach den Ansprüchen 1 bis 3, in denen das erste Modifikationsmittel in einer Menge zugegeben wird, die 4 bis 7 Gew.-% entspricht.

5. Zusammensetzungen nach den Ansprüchen 1 bis 4, in denen das zweite Modifikationsmittel in einer Menge zugegeben wird, die 0,5 bis 3 Gew.-% entspricht.

6. Verwendung der Zusammensetzungen nach den Ansprüchen 1 bis 5 zur Herstellung von drainierenden Straßendecken.

7. Verfahren zur Herstellung von Zusammensetzungen nach einem der Ansprüche 1 bis 5, ***dadurch gekennzeichnet,*** daß man in einen Asphaltmischer bei Temperaturen zwischen 130 und 185 °C einführt:
a) das mineralische Skelett,
b) entweder den Bitumen und das gegebenenfalls mit Öl gestreckte erste Mcdifikationsmittel oder ein zuvor in einem Behälter bei 150 bis 180 °C gemischtes, modifiziertes Bindemittel aus Bitumen und homogenem Copolymer,
c) das zweite Modifikationsmittel.

8. Verfahren zur Herstellung nach Anspruch 7, worin die Komponenten bei einer Temperatur von etwa 140 °C in den Asphaltmischer gegeben werden.

9. Rolloberflächen mit drainierenden Eigenschaften, ***gekennzeichnet*** durch die Zusammensetzungen nach einem der Ansprüche 1 bis 5.

## Claims

1. Asphalt-based compositions essentially comprising:
- a mineral framework comprising (by weight):
79 to 88 parts of metalling with a grain size of 6/17,
9 to 15 parts of sand with a grain size of 0.08/2,
3 to 8 parts of inert filling material with a grain size of less than 0.08,
calculated so as to obtain a total of 100 parts;
- bitumen having a penetration in the range of between 65 and 150 tenths of a millimetre at 25°C, in a quantity corresponding to 3.5 to 7% by weight, calculated on the basis of the mineral mass;
- a first modifier chosen from the group comprising the copolymers styrene-butadiene or styrene-isoprene or a mixture of such copolymers, or of recycled tyres, in a quantity corresponding to 2 to 7% by weight, calculated on the basis of the mass of the bitumen, possibly extended by 0 to 3% by weight of oil;
- a second modifier chosen from the group comprising the polyolefins, polyethylene terephthalate or a mixture of such polymers, in a quantity corresponding to 0.5 to 5% by weight, calculated on the basis of the mineral mass.

2. Compositions according to Claim 1, in which the mineral framework comprises:
81 to 85 parts of metalling with a grain size of 7/14
11 to 13 parts of sand with a grain size of 0.08/2
4 to 6 parts of filling material with a grain size of less than 0.08.

3. Compositions according to Claims 1 or 2, characterised in that the bitumen has a penetration value in the range of between 80 and 100 tenths of a millimetre.

4. Compositions accordir.g to Claims 1 to 3, in which the first modifier is introduced in a quantity corresponding to 4 to 7% by weight.

5. Compositions according to Claims 1 to 4, in which the second modifier is introduced in a quantity corresponding to 0.5 to 3% by weight.

6. Use of the compositions according to Claims 1 to 5 for the production of road surfacing materials with good drainage.

7. Process for preparing the compositions according to any one of Claims 1 to 5, characterised in that the following are introduced into a kneading machine, at temperatures in the range of between 130° and 185°C:
a) the mineral framework,
b) eitner the bitumen and the first modifier, possibly extended by oil, or the homogeneous, modified bitumen-copolymer binder initially mixed in a vessel at 150-180°C,
c) the second modifier.

8. Process of preparation according to Claim 7, in which the components are introduced into the kneading machine at a temperature of about 140°C.

9. Road surfaces having good drainage properties, characterised by the compositions according to any one of Claims 1 to 5.
